# FASCICULE DE BREVET EUROPEEN

(11) **EP 2 007 049 B1**
(45) Date de publication et mention de la délivrance du brevet: **21.04.2010**
(21) Numéro de dépôt: 08305284.5
(22) Date de dépôt: 19.06.2008
(51) Int. Cl.: H04J 14/02

(54) **Dispositif de transmission de signaux optiques multidébits**
Vorrichtung zur Übertragung optischer Signale mit unterschiedlichen Datenraten
Device for transmitting multi-rate optical signals

(30) Priorité: 21.06.2007 FR 0755932
(43) Date de publication de la demande: 24.12.2008
(73) Titulaire: Alcatel Lucent, 75008 Paris (FR)
(72) Inventeur: Antona, Jean-Christophe, 92330 Sceaux (FR); Courtois, Olivier, 91620 La Ville du Bois (FR)
(74) Mandataire: Thibaud, Jean-Baptiste

(56) Documents cités:
- FR-A- 2 844 120

## Description

L'invention se rapporte au domaine des réseaux optiques WDM, notamment à des dispositifs de transmission de signaux optiques multidébits.

La maîtrise de la technologie de la transmission par fibre optique à multiplexage de longueurs d'ondes ou WDM est un facteur important pour répondre aux besoins croissants de débits dans la transmission d'informations. Le multiplexage de longueurs d'ondes consiste à combiner sur une même fibre optique plusieurs canaux modulés ayant chacun une longueur d'onde porteuse différente. Ainsi, le débit global d'une ligne de transmission est égal à la somme des débits des différents canaux.

Toutefois, la transmission WDM est soumise à des limitations quant à la distance sur laquelle on est capable de transporter le signal optique sans perte de qualité. Ces limitations sont dues à différents effets physiques, notamment la dispersion chromatique. En effet, à la fin de la transmission, il est nécessaire que la dispersion chromatique résiduelle du signal optique soit comprise dans une plage de tolérance du récepteur optoélectronique pour que la détection présente une qualité correcte. L'amplitude de cette plage est d'autant plus petite que le débit symbole ou la fréquence de modulation du signal est élevée. La portée des systèmes est limitée également par les effets non linéaires qui intéragissent avec la dispersion chromatique. La façon de compenser la dispersion le long de la ligne a donc une incidence directe sur les performances de la transmission. Il est donc nécessaire de compenser la dispersion chromatique dans les réseaux optique multidébits d'une manière différente selon la modulation des canaux.

FR2844120 décrit système de transmission WDM dans lequel les canaux situés dans une première bande spectrale, dans laquelle la dispersion chromatique de la fibre optique est faible, sont modulés à 2,5Gb/s et ne nécessitent aucun traitement de compensation de la dispersion. Les canaux situés dans une seconde bande spectrale, dans laquelle la dispersion chromatique de la fibre optique est importante, sont modulés à 10Gb/s. Un compensateur de dispersion compense la dispersion du groupe de canaux dans la seconde bande spectrale exclusivement. La distance de propagation est de 70 à 80 km.

Un besoin actuel est de faire évoluer les réseaux optiques vers des architectures transparentes. On applique le qualificatif « transparent » à un système de transmission dans lequel le signal reste dans le domaine optique sans conversion dans le domaine électronique. Un noeud de commutation transparent est capable de commuter des canaux de longueur d'onde sans les convertir dans le domaine électronique. La transparence dans les réseaux de communication optique est une caractéristique qui permet de réduire le coût des équipements de réseau en supprimant des conversions optique-électrique-optique, et donc des transducteurs correspondants. Des sous-systèmes utilisés dans les réseaux WDM transparents sont notamment les multiplexeurs optiques reconfigurables à insertion-extraction ou ROADM et les brasseurs optiques transparents ou OXC. La transparence tend à accroître la distance de propagation devant être couverte par les signaux optiques.

Un autre besoin qui existe est celui d'une extensibilité du réseau, c'est à dire la capacité du réseau à évoluer de manière à transporter un trafic de plus en plus volumineux. Cette évolution peut revêtir plusieurs formes non exclusives les unes des autres, comme l'accroissement du nombre de canaux de longueur d'onde utilisés sur un lien, l'accroissement du nombre de liens, l'accroissement du nombre de noeuds, l'accroissement du degré de connectivité des noeuds existants, et l'accroissement du débit des canaux. Un autre besoin corollaire est celui d'une modularité ou d'une flexibilité des éléments du réseau, permettant de conduire les évolutions susmentionnées de manière progressive en s'adaptant aux besoins effectifs.

Un but de l'invention est de fournir un dispositif de transmission de signaux optiques adapté à répondre à au moins certains des besoins susmentionnés. Un autre but de l'invention est de fournir tel un dispositif de transmission de signaux optiques à un coût optimal.

Pour cela, l'invention fournit un dispositif de transmission de signaux optiques comportant :
une première pluralité de sources optiques pour produire des canaux de longueur d'onde modulés selon une première modulation,
une deuxième pluralité de sources optiques pour produire des canaux de longueur d'onde modulés selon une deuxième modulation,
des moyens de multiplexage pour faire passer un ensemble de canaux de longueur d'onde vers une ligne de transmission optique de sortie, lesdits moyens de multiplexage étant agencés pour faire passer depuis une première section d'entrée des canaux de longueur d'onde produits par ladite première pluralité de sources optiques et pour faire passer depuis une deuxième section d'entrée des canaux de longueur d'onde produits par ladite deuxième pluralité de sources optiques,
caractérisé par le fait qu'il comporte une section de combinaison pour combiner les canaux de longueur d'onde produits par la première et la deuxième pluralités de sources optiques dans une section de propagation commune, des moyens d'amplification pour amplifier lesdits canaux de longueur d'onde dans la section de propagation commune et une section de diffusion pour diffuser les canaux de longueur d'onde depuis la section de propagation commune vers la première et la deuxième sections d'entrée des moyens de multiplexage.

L'amplification réalisée au niveau de la section de propagation commune permet de satisfaire les besoins de puissance ou de rapport signal sur bruit pour atteindre une portée de transmission satisfaisante, tout en limitant le coût du dispositif. Par exemple, l'amplification peut être réalisée de manière commune pour tous les canaux à l'aide d'un amplificateur large bande, par exemple EDFA ou autre, agencé dans la section commune. Plusieurs étages d'amplification peuvent aussi être montés en série dans la section commune pour satisfaire un besoin de puissance plus important.

La ou les différences entre la première modulation et la deuxième modulation peuvent être relatives aux fréquences de modulation et/ou aux formats de modulation et/ou à toute autre caractéristique du signal, par exemple débit symbole, débit binaire, profondeur.

Selon un mode de réalisation préféré, les moyens de multiplexage comportent un module de sélection de longueurs d'ondes reconfigurable programmé pour sélectionner des canaux de longueur d'onde produits par ladite première pluralité de sources optiques au niveau d'un premier port d'entrée, relié à la première section d'entrée, et sélectionner des canaux de longueur d'onde produits par ladite deuxième pluralité de sources optiques au niveau d'un deuxième port d'entrée, relié à la deuxième section d'entrée.

Le module de sélection de longueurs d'ondes reconfigurable peut être réalisé sous la forme de composants discrets ou sous la forme d'un commutateur à sélection de longueurs d'ondes (équipement également connu sous le nom de Wavelength Selective Switch ou WSS). De tels équipements présentent un intérêt considérable en ce qu'ils permettent de réaliser des noeuds de commutation de degré quelconque ayant une grande flexibilité de configuration avec une structure nettement plus simple qu'en utilisant des composants discrets, un encombrement moindre et une fiabilité élevée.

Avantageusement, le module de sélection de longueurs d'ondes reconfigurable comporte des moyens de filtrage reconfigurables pour régler une largeur de bande des canaux de longueur d'onde sélectionnés pour être transmis. Cette caractéristique permet d'accroître la flexibilité d'utilisation des longueurs d'ondes, étant donné que la largeur de bande des canaux n'est généralement pas la même pour les différentes modulations. Ainsi, une reconfiguration des moyens de filtrage peut être utile lorsqu'on souhaite modifier la fréquence de modulation ou le format de modulation d'un canal de longueur d'onde.

De préférence, le module de sélection de longueurs d'ondes reconfigurable comporte un troisième port d'entrée apte à recevoir des canaux de longueur d'onde depuis une ligne de transmission optique amont. Ainsi, le dispositif de transmission peut être intégré à un noeud optique transparent, par exemple un ROADM ou un OXC. Le dispositif de transmission peut notamment servir à réaliser la fonction d'insertion dans un noeud optique transparent. Dans ce cas, le module de sélection de longueurs d'ondes cumule plusieurs fonctions : (i) sélectionner au niveau du troisième port d'entrée les canaux provenant de l'amont et devant être transmis vers la ligne de transmission de sortie (trafic en transit), (ii) sélectionner au niveau des premier et deuxième ports d'entrée les canaux à insérer et, (iii) combiner le trafic en transit avec le trafic inséré.

Selon un mode de réalisation particulier, une ligne de transit est prévue pour transporter des canaux de longueur d'onde jusqu'au troisième port d'entrée et un module d'extraction est connecté à la ligne de transit pour démoduler des données numériques portées par au moins un desdits canaux de longueur d'onde. Par exemple la section d'extraction peut être connectée par un coupleur dans une l'architecture de type «diffusion et sélection » (broadcast and select).

Avantageusement, un élément de compensation de la dispersion est agencé pour traiter les canaux arrivant dans ladite ligne de transit. Par exemple, un tel élément peut servir à contrôler l'accumulation de la dispersion entre deux noeuds, notamment pour des canaux ayant couvert une grande distance.

Avantageusement, la section de combinaison comporte un combineur optique non coloré. Par opposition à un dispositif coloré tel un multiplexeur dans lequel chaque port d'entrée est adapté à une étroite plage de longueur d'onde, par exemple un seul canal, un combineur optique non coloré permet d'accueillir n'importe quel canal de longueur d'onde au niveau de chaque port.

Lorsque les moyens de multiplexage réalisent une sélection spectrale des canaux qu'ils laissent passer depuis chaque section d'entrée avec un bon niveau d'isolation, il n'est pas nécessaire d'effectuer une telle sélection spectrale au niveau des moyens de diffusion. De préférence, la section de diffusion comporte un coupleur optique non coloré diffusant tous les canaux vers chaque section d'entrée des moyens de multiplexage.

Selon d'autres modes de réalisation avantageux, le noeud de communication peut présenter une ou plusieurs des caractéristiques suivantes :
- un atténuateur optique variable au niveau de la section de propagation commune. Un tel composant peut servir à l'égalisation des canaux.
- un atténuateur optique variable au niveau d'une section d'entrée des moyens de multiplexage.
- un élément de compensation de la dispersion agencé pour traiter les canaux sortant desdits moyens de multiplexage. Par exemple, un tel élément peut servir à la pré-compensation de la dispersion pour tous les canaux à transmettre dans la ligne de transmission de sortie.
- les première et deuxième sections d'entrée des moyens de multiplexage présentent des caractéristiques de dispersion chromatique différentes l'une de l'autre adaptées respectivement aux canaux de longueur d'onde modulés selon la première modulation et aux canaux de longueur d'onde modulés selon la deuxième modulation.

Par cette dernière caractéristique, le dispositif est adapté à engendrer et transmettre vers une ligne de transmission optique de sortie un signal optique WDM multidébits dans lequel les canaux ont une correction de la dispersion différentiée selon leur modulation. Les caractéristiques de dispersion chromatique différentes des deux sections d'entrée des moyens de multiplexage permettent de tenir compte des besoins de chaque signal en terme de compensation de la dispersion. Selon un mode de réalisation particulier, la fréquence de la deuxième modulation est plus grande que la fréquence de la première modulation. De préférence dans ce cas, la dispersion chromatique de la deuxième section d'entrée présente une valeur positive supérieure à la dispersion chromatique de la première section d'entrée.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
La figure 1 est une représentation schématique partielle d'un réseau optique transparent.
La figure 2 est une représentation schématique fonctionnelle d'un noeud optique transparent pouvant être utilisé dans le réseau de la figure 1.

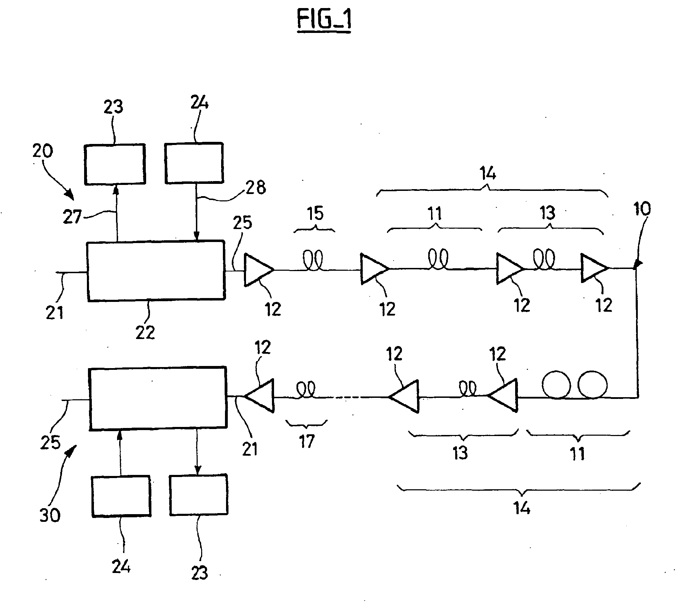

Sur la figure 1, on a représenté schématiquement un réseau optique comportant une ligne de transmission 10 reliant un noeud de commutation transparent 20 à un noeud de commutation transparent 30. Par exemple, les noeuds 20 et 30 présentent un connectivité égale à 2 et sont donc des ROADM. Fonctionnellement, un ROADM comporte une entrée 21 pour recevoir un signal optique WDM, c'est à dire un ensemble de canaux de longueur d'onde multiplexés ; une matrice de commutation transparente 22 pour sélectivement bloquer les canaux ne devant pas être transmis en aval et laisser passer les autres, dits canaux en transit ; un module d'extraction 23 pour démoduler les données portées par certains canaux, dits canaux extraits 27 ; un module d'insertion 24 pour produire des canaux à transmettre en aval, dits canaux insérés 28 ; et une sortie 25 pour transmettre un signal optique WDM comprenant les canaux en transit et les canaux insérés.

La ligne de transmission 10 peut être constituée d'une ou plusieurs sections de fibres optiques avec, si nécessaire, des éléments destinés à compenser la dispersion chromatique. Dans l'exemple représenté, la ligne de transmission 10 comporte une succession de sections à dispersion positive 11 et de sections à dispersion négative 13 disposées en alternance pour contenir la dispersion chromatique cumulée des canaux. Par exemple, les sections 11 peuvent être réalisées avec des fibres optiques standard, par exemple de type SMF ou LEAF ou autre. Les sections 13 peuvent être réalisées avec une longueur de fibre à compensation de dispersion ou d'autres types d'éléments de compensation, par exemple à base de réseau de Bragg à pas variable « chirp », réseau de phase, ou autre. Des modules de compensation accordables peuvent aussi être utilisés. De préférence, la ligne 10 comprend une succession de tronçons 14 ayant une dispersion identique. Ici un tronçon 14 comporte une section 11 et une section 13. Le nombre de tronçons peut être supérieur ou inférieur à deux, selon la distance à couvrir.

Dans l'exemple représenté, on a aussi prévu un module de compensation de la dispersion 15 au niveau de la sortie du noeud 20 et un module de compensation de la dispersion 17 au niveau de l'entrée du noeud 30. Ils peuvent être réalisés avec les techniques précitées.

Des amplificateurs optiques 12, par exemple de type EDFA, peuvent être prévus en différents points de la ligne de transmission 10 pour compenser les pertes et conserver un niveau de signal acceptable pour la réception des données. Sur la figure 1, des amplificateurs 12 sont prévus au niveau des sections 13 pour compenser les pertes d'insertion des éléments de compensation de la dispersion.

La figure 1 n'est qu'un exemple parmi d'autres d'une structure de ligne de transmission. Toutefois, tant que la ligne de transmission 10 comporte des éléments de compensation de la dispersion agencés d'une manière à recevoir tous les canaux, il n'est généralement pas possible de choisir ou régler ces éléments de compensation d'une manière qui satisfasse des exigences différentes pour différents canaux. Ce problème se pose notamment lorsque la ligne de transmission 10 doit transporter simultanément des canaux présentant des modulations différentes, par exemple différentes en termes de fréquence de modulation et/ou de format de modulation. En d'autres termes, la ligne de transmission 10 produit une carte de dispersion qui n'est adaptée qu'à un seul type de canaux en termes de niveaux de dispersion et d'effets non linéaires.

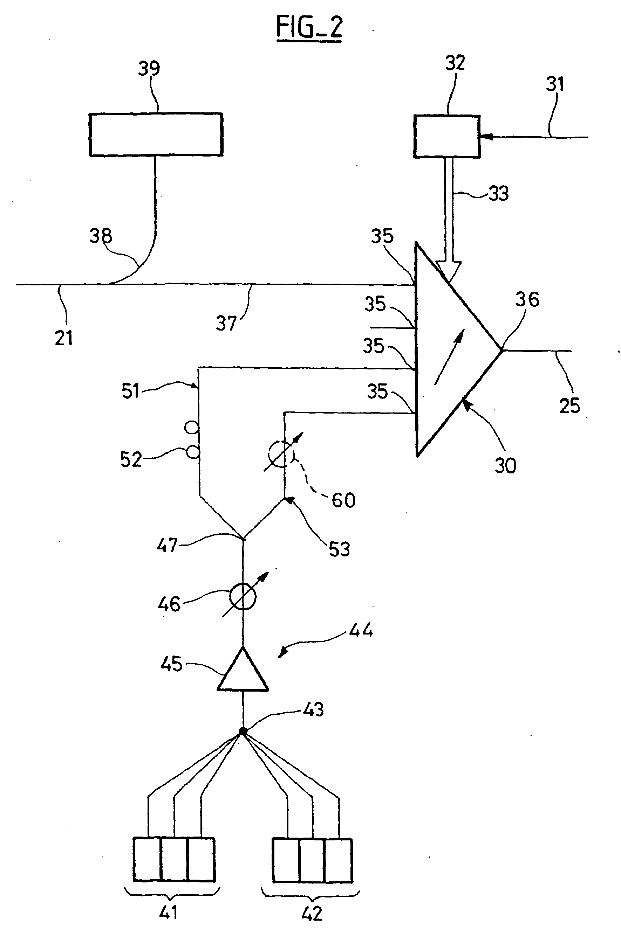

En référence à la figure 2, on décrit maintenant une architecture convenant pour réaliser les ROADM 20. Dans cette architecture, la partie insertion est conçue pour appliquer un traitement de pré-compensation différent aux canaux qui ont des modulations différentes. L'architecture représentée est de type « diffusion et sélection » avec un WSS 30 qui constitue la matrice de commutation transparente.

On rappelle qu'un WSS est un multiplexeur programmable à N ports d'entrée, ici N=4, dans lequel chaque port d'entrée 35 peut recevoir un ou plusieurs canaux de longueur d'onde et dans lequel le port de sortie 36 transmet un ou plusieurs canaux de longueur d'onde sélectionnés parmi les canaux reçus sur les entrées. Cette sélection est obtenue en fournissant des instructions logiques 31 à une unité de commande 32, qui pilote des moyens de modulation spatiale intégrés au WSS en réponse à ces instructions, comme indiqué par la flèche 33. Les moyens de modulation spatiale de la lumière, non représentés, peuvent revêtir différentes formes, par exemple des microréflecteurs actionnés par des microactionneurs MEMS, des matrices de cristaux liquides et autres. En fonction de l'état de programmation du WSS, un canal reçu sur un port d'entrée 35 est, soit passé vers le port de sortie 36, soit bloqué par absorption. Les instructions 31 spécifient, pour chaque port d'entrée, quels canaux ce port d'entrée doit laisser passer vers la sortie. Il convient de sélectionner des longueurs d'ondes différentes au niveau de chaque port, sous peine de créer une interférence des signaux à la sortie. Le WSS 30 inclut des moyens de filtrage qui participent à la fonction de sélection des canaux. Ces moyens de filtrage sont adaptés à une ou plusieurs grilles de longueur d'onde prédéterminées. De préférence, ces moyens de filtrage sont reconfigurables pour pouvoir régler la largeur de bande de chaque canal.

Dans le WSS 30 représenté, un premier port d'entrée est un port de transit relié à une fibre d'entrée 37 pour recevoir des canaux de longueur d'onde depuis une portion du réseau optique située en amont du ROADM, par exemple un autre noeud distant non représenté. Le deuxième port d'entrée n'est pas utilisé ici. Les troisième et quatrième ports d'entrée sont dédiés à l'insertion de trafic.

La fonction d'extraction est ici réalisée au moyen d'un dispositif d'extraction 39 vers lequel un coupleur 38 dirige une fraction de chaque canal entrant. Le dispositif d'extraction 39 comprend un ou plusieurs récepteurs optiques pour démoduler les données des signaux optiques à extraire. Il peut aussi comporter divers composants optiques pour sélectionner les canaux à extraire, tels que démultiplexeurs, coupleurs, filtres fixes ou accordables, portes optiques, WSS, etc. De préférence, on emploie des récepteurs optiques à compensation de dispersion intégrée.

Pour insérer des canaux de longueur d'onde ayant différentes modulations, le ROADM comporte plusieurs types de transmetteurs optiques. Un transmetteur optique comporte essentiellement une source laser à longueur d'onde fixe ou accordable et un modulateur pour moduler l'onde optique porteuse avec les données numériques à transmettre. Un premier groupe de transmetteurs optiques 41 fonctionne selon une première modulation, par exemple à une fréquence de 10Gb/s. Un deuxième groupe de transmetteurs optiques 42 fonctionne selon une deuxième modulation qui présente des exigences différentes en termes de dispersion chromatique, par exemple à une fréquence de 40Gb/s. Les transmetteurs optiques 41 et 42 fonctionnent tous à des longueurs d'ondes différentes. Un combineur de type M:1, où M désigne le nombre de branches d'entrée, ici M=6, rassemble les canaux de longueur d'onde engendrés par les transmetteurs optiques 41 et 42 et les combine sur un support de propagation commun 44, par exemple une fibre optique. Un amplificateur optique 45, par exemple EDFA, amplifie tous ces canaux. Le rôle de l'amplificateur optique 45 peut être multiple, par exemple compenser la puissance insuffisante des transmetteurs, compenser les pertes d'insertion de certains éléments comme le combineur 43 et/ou équilibrer la puissance des canaux insérés avec le trafic en transit sur la ligne 37. Un atténuateur optique variable 46 peut aussi être prévu au niveau du support de propagation commun 44 pour contrôler les canaux insérés. Ensuite, un coupleur 47 de type 1:2 transmet 50% de la puissance de chaque canal dans deux branches 51 et 53, par exemple en fibre optique, reliées respectivement au troisième et au quatrième ports d'entrée du WSS 30. Le WSS 30 peut remplir une fonction d'égalisation de puissance canal par canal.

Le WSS 30 est programmé pour sélectionner au niveau du quatrième port des canaux de longueur d'onde transmis par le premier groupe de transmetteurs 41 et au niveau du troisième port des canaux de longueur d'onde transmis par le deuxième groupe de transmetteurs 42. Ainsi, le WSS 30 ne transmet pas au niveau de la sortie 25 les canaux présentant la deuxième modulation reçus au niveau du quatrième port, ni les canaux présentant la première modulation reçus au niveau du troisième port.

Dans la branche 53 entre le coupleur 47 et le quatrième port, la dispersion chromatique est adaptée aux canaux présentant la première modulation. Dans l'exemple représenté, on suppose que la ligne 10 est optimisée pour compenser la dispersion de ces canaux, de sorte qu'aucune compensation supplémentaire de la dispersion n'est nécessaire au niveau du ROADM. Dans la branche 51 entre le coupleur 47 et le troisième port, la dispersion chromatique est adaptée aux canaux présentant la deuxième modulation. Pour cela, un élément de compensation de la dispersion 52, par exemple une longueur de fibre à compensation de dispersion ou autre, est monté sur la branche 51. L'élément 52 est choisi de manière que la dispersion des canaux présentant la deuxième modulation soit améliorée en bout de transmission, compte tenu des propriétés de la ligne 10 optimisée pour compenser la dispersion des canaux présentant la première modulation. Un module de compensation réglable peut être employé.

### Exemple 1:

Le premier groupe de canaux est modulé en amplitude à 10 Gb/s avec un format Non Return-to-Zero (NRZ). Le deuxième groupe de canaux est modulé à 40 Gb/s avec un format PSBT. L'élément 52 introduit une dispersion additionnelle positive de l'ordre de 100 à 1000 ps/nm, par exemple 500ps/nm +/-10%. Tous ces canaux sont placés sur une grille normalisée avec un espacement de 50GHz. Si le volume de trafic inséré doit augmenter, il est possible d'ajouter un ou plusieurs canaux et de modifier de manière correspondante la programmation du WSS 30. Il est aussi possible de remplacer un ou plusieurs canaux du premier groupe par un ou plusieurs canaux du deuxième groupe en réutilisant les mêmes longueurs d'onde. Pour cela, un transmetteur 41 est remplacé par un transmetteur 42 à la même longueur d'onde. Il suffit ensuite de modifier la programmation du WSS 30 pour que cette longueur d'onde soit dorénavant passée depuis le troisième port, et non plus depuis le quatrième port.

### Exemple 2 :

Les canaux du premier groupe sont modulés en amplitude à 10 Gb/s avec un format Non Return-to-Zero (NRZ) et placés sur une grille normalisée de 90 fréquences porteuses avec un espacement de 50 GHz. Les canaux du deuxième groupe sont modulés en phase à 40 Gb/s avec un format DPSK et placés sur une grille normalisée de 45 fréquences avec un espacement de 100 GHz. Le WSS 30 est un modèle présentant une fonction de filtrage réglable par canal, de manière à pouvoir sélectionner une largeur de bande à -3dB qui convienne pour les canaux du premier groupe, par exemple de l'ordre de 30GHz dans un premier réglage, ou une largeur de bande à -3dB qui convienne pour les canaux du deuxième groupe, par exemple de l'ordre de 70GHz dans un deuxième réglage. Si le volume de trafic inséré doit augmenter, il est possible d'ajouter un ou plusieurs transmetteurs 41 ou 42 et de modifier de manière correspondante la programmation du WSS 30. Il est aussi possible de remplacer un ou plusieurs canaux du premier groupe par un ou plusieurs canaux du deuxième groupe en réutilisant les mêmes longueurs d'onde, tout en tenant compte de l'espacement spectral des canaux devant être respecté. Pour cela, deux transmetteurs 41 sont par exemple remplacés par un transmetteur 42 à une longueur d'onde intermédiaire. Il suffit ensuite de modifier la programmation du WSS 30 pour passer cette longueur d'onde depuis le troisième port, et pour régler le filtrage associé à cette longueur d'onde.

Les modes de réalisation des exemples 1 et 2 permettent d'effectuer une transition progressive entre un réseau à 10Gb/s et un réseau à 40Gb/s. Il n'est pas nécessaire d'affecter une bande de fréquence différente à chaque groupe de canaux. Pour le cas où il ne resterait finalement plus aucun canal inséré à 10Gb/s, on peut prévoir de déconnecter physiquement la branche 53. Un atténuateur optique variable 60 est prévu sur la figure 2 pour éteindre le signal dans la branche 53 avant d'effectuer cette déconnexion physique, afin de limiter la perturbation résultante. Un atténuateur optique variable peut aussi être prévu sur la branche 51.

Des commutateurs à sélection de longueur d'onde convenant pour ces modes de réalisation sont disponibles auprès de la société Optium Corp., notamment dans un modèle à 4 entrées et un modèle à 9 entrées. D'autres commutateurs à sélection de longueurs d'ondes et leurs applications sont décrits dans IEEE Communication Magazine, mars 2003, pp 88-94.

La représentation du combineur 43 à 6 branches avec 6 transmetteurs n'est qu'un exemple illustratif. Plus ou moins de transmetteurs peuvent être prévus, par exemple 16 ou 32 avec un combineur 16:1 ou 32:1 respectivement. Des transmetteurs capables de fonctionner sélectivement selon plusieurs modulations peuvent aussi être employés, ce qui facilite la reconfiguration du trafic inséré.

Les modulations décrites dans les exemples ne sont pas limitatives. Des transmetteurs ayant d'autres caractéristiques en termes de formats de modulation, fréquences de modulation, grille de longueurs d'ondes, ou nombre de canaux peuvent être utilisés.

Un module d'insertion similaire à celui du ROADM de la figure 2 peut aussi être utilisé dans un noeud de degré supérieur ou d'architecture différente. Le module d'insertion peut être adapté pour transmettre des canaux ayant plus de deux modulations différentes, et nécessitant à chaque fois une pré-compensation différente. Notamment, le port libre de la figure 2 peut servir à connecter une troisième branche d'entrée provenant du coupleur 47 avec un élément de compensation différent pour des canaux ayant une troisième modulation.

Pour un noeud de degré supérieur, une ou plusieurs lignes de transmission amont supplémentaires pourraient être raccordées au WSS au niveau de ports d'entrée supplémentaires. Une ou plusieurs lignes de de transmission aval supplémentaires pourraient être raccordées au noeud, par exemple à l'aide d'un coupleur de redirection agencé de manière similaire au coupleur 38 de la figure 2.

Dans certains modes de réalisation, la ligne de transmission 10 peut être conçue de manière à être compatible avec plusieurs types de canaux, par exemple des canaux à 10Gb/s et à 40Gb/s, ce qui supprime le besoin d'effectuer une précompensation différente de ces canaux au niveau des moyens d'insertion du noeud. Dans certains modes de réalisation, des éléments de compensation permettant d'effectuer des compensations différentes pour différents types de canaux sont prévus à d'autres emplacements dans le chemin optique, par exemple au niveau de la ligne de transmission 10.

L'unité de commande 32 peut être réalisée sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C+ +, Java ou VHDL. Cette liste n'est pas exhaustive.

Par ailleurs, un noeud de commutation ROADM ou OXC peut fonctionner en relation avec un système de gestion de réseau pour recevoir les instructions 31. Un système de gestion de réseau peut être un équipement matériel, par exemple un micro-ordinateur, une station de travail, un appareil connecté à l'Internet ou tout autre dispositif de communication dédié ou à usage général. Des programmes logiciels exécutés par ce système remplissent des fonctions de gestion du réseau pour contrôler des éléments de réseau.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs moyens ou modules peuvent être représentés par un même élément matériel.

Dans les revendications, tout signe de référence entre parenthèses ne saurait être interprété comme une limitation de la revendication.

## Revendications

1. Dispositif de transmission de signaux optiques comportant :
une première pluralité de sources optiques (41) pour produire des canaux de longueur d'onde modulés selon une première modulation,
une deuxième pluralité de sources optiques (42) pour produire des canaux de longueur d'onde modulés selon une deuxième modulation,
des moyens de multiplexage (30) pour faire passer un ensemble de canaux de longueur d'onde vers une ligne de transmission optique de sortie (25), lesdits moyens de multiplexage étant agencés pour foiré passer depuis une première section d'entrée (53) des moyens de multiplexage (30) des canaux de longueur d'onde produits par ladite première pluralité de sources optiques et pour faire passer depuis une deuxième section d'entrée (51) des moyens de multiplexage (30) des canaux de longueur d'onde produits par ladite deuxième pluralité de sources optiques,
**caractérisé par le fait qu'**il comporte une section de propagation commune une section de combinaison (43) pour combiner les canaux de longueur d'onde produits par la première et la deuxième pluralités de sources optiques dans la section de propagation commune, des moyens d'amplification (45) pour amplifier lesdits canaux de longueur d'onde dans la section de propagation commune et une section dé diffusion (47) pour diffuser les canaux de longueur d'onde depuis la section de propagation commune vers la première et la deuxième sections d'entrée (53, 51) des moyens de multiplexage.

2. Dispositif de transmission selon la revendication 1, **caractérisé par le fait que** lesdits moyens de multiplexage comportent un module de sélection de longueurs d'ondes reconfigurable (30) programmé pour sélectionner des canaux de longueur d'onde produits par ladite première pluralité de sources optiques au niveau d'un premier port d'entrée et sélectionner des canaux de longueur d'onde produits par ladite deuxième pluralité de sources optiques au niveau d'un deuxième port d'entrée.

3. Dispositif de transmission selon la revendication 2, **caractérisé par le fait que** ledit module de sélection de longueurs d'ondes reconfigurable (30) comporte des moyens de filtrage reconfigurables pour régler une largeur de bande das canaux de longueur d'onde sélectionnés.

4. Dispositif de transmission selon la revendication 2 ou 3, **caractérisé par le fait que** ledit module de sélection de longueurs d'ondes reconfigurable comporte un port de transit (35) apte à recevoir des canaux de longueur d'onde depuis une ligne de transmission optique amont (21).

5. Dispositif de transmission selon la revendication 4, **caractérisé par le fait qu'**il comporte une ligne de transit (37) pour transporter des canaux de longueur d'onde jusqu'au port de transit et un module d'extraction (39) connecté à la ligne de transit pour démoduler des données numériques portées par au moins un desdits canaux de longueur d'onde.

6. Dispositif de transmission selon la revendication 5, **caractérisé par le fait qu'**il comporte un élément de compensation de la dispersion (1 7) agencé pour traiter les canaux arrivant dans ladite ligne de transit.

7. Dispositif de transmission selon l'une des revendications 1 à 6, **caractérisé par le fait que** la section de combinaison comporte un combineur optique non coloré (43).

8. Dispositif de transmission selon l'une des revendications 1 à 7, **caractérisé par le fait que** la section de diffusion comporte un coupleur optique non coloré (47).

9. Dispositif de transmission selon l'une des revendications 1 à 8, **caractérisé par le fait qu'**il comporte un atténuateur optique variable (46) au niveau de la section de propagation commune.

10. Dispositif de transmission selon l'une des revendications 1 à 9, **caractérisé par le fait qu'**il comporte un élément de compensation de la dispersion (15) agencé pour traiter les canaux sortant desdits moyens de multiplexage.

11. Dispositif de transmission selon l'une des revendications 1 à 10, **caractérisé par le fait que** la première modulation et la deuxième modulation diffèrent quant à leurs fréquences de modulation.

12. Dispositif de transmission selon l'une des revendications 1 à 11, **caractérisé par le fait que** la première modulation et la deuxième modulation diffèrent quant à leurs formats de modulation.

13. Dispositif de transmission selon l'une des revendications 1 à 12, **caractérisé par le fait que** lesdites première et deuxième sections d'entrée des moyens de multiplexage présentent des caractéristiques de dispersion chromatique différentes l'une de l'autre adaptées respectivement aux canaux de longueur d'onde modulés selon la première modulation et aux canaux de longueur d'onde modulés selon la deuxième modulation.

## Claims

1. Optical signal transmission device, comprising:
a first plurality of optical sources (41) for producing wavelength channels modulated according to a first modulation,
a second plurality of optical sources (42) for producing wavelength channels modulated according to a second modulation,
multiplexing means (30) to pass a set of wavelength channels towards an output optical transmission line (25), said multiplexing means being configured to pass, from a first input section (53) of the multiplexing means (30), wavelength channels produced by said first plurality of optical sources and to pass, from a second input section (51) of the multiplexing means (30), wavelength channels produced by said second plurality of optical sources,
**characterized by** the fact that it comprises a common propagation section, a combination section (43) to combine the wavelength channels produced by the first and the second pluralities of optical sources in the common propagation section, amplification means (45) for amplifying said wavelength channels in the common propagation section and a distribution section (47) for distributing the wavelength channels from the common propagation section to the first and second input sections (53, 51) of the multiplexing means.

2. Transmission device according to claim 1, **characterized by** the fact that said multiplexing means comprise a reconfigurable wavelength selection module (30) programmed to select wavelength channels produced by said first plurality of optical sources in a first input port and to select wavelength channels produced by said second plurality of optical sources in a second input port.

3. Transmission device according to claim 2, **characterized by** the fact that said reconfigurable wavelength selection module (30) comprises reconfigurable means of filtering to adjust a bandwidth of the selected wavelength channels.

4. Transmission device according to claim 2 or 3, **characterized by** the fact that said reconfigurable wavelength selection module comprises a transit port (35) able to receive wavelength channels from an upstream optical transmission line (21).

5. Transmission device according to claim 4, **characterized by** the fact that it comprises a transit line (37) to transport wavelength channels to the transit port and an extraction module (39) connected to the transit line to demodulate digital data carried by at least one of said wavelength channels.

6. Transmission device according to claim 5, **characterized by** the fact that it comprises a dispersion compensation element (17) configured to handle the incoming channels to said transit line.

7. Transmission device according to one of claims 1 to 6, **characterized by** the fact that the combination section comprises an uncolored optical combiner (43).

8. Transmission device according to one of claims 1 to 7, **characterized by** the fact that the distribution section comprises an uncolored optical coupler (47).

9. Transmission device according to one of claims 1 to 8, **characterized by** the fact that it comprises a variable optical attenuator (46) in the common propagation section.

10. Transmission device according to one of claims 1 to 9, **characterized by** the fact that it comprises a dispersion compensation element (15) configured to handle the outgoing channels from said multiplexing means.

11. Transmission device according to one of claims 1 to 10, **characterized by** the fact that the first modulation and the second modulation vary with regard to their modulation frequencies.

12. Transmission device according to one of claims 1 to 11, **characterized by** the fact that the first modulation and the second modulation vary with regard to their modulation formats.

13. Transmission device according to one of claims 1 to 12, **characterized by** the fact that said first and second input sections of the multiplexing means have different chromatic dispersion characteristics adapted respectively to the wavelength channels modulated according to the first modulation and to the wavelength channels modulated according to the second modulation.

## Patentansprüche

1. Vorrichtung zur Übertragung optischer Signale, umfassend:
Eine erste Vielzahl von optischen Quellen (41) zum Erzeugen von gemäß einer ersten Modulation modulierten Wellenlängenkanälen,
eine zweite Vielzahl von optischen Quellen (42) zum Erzeugen von gemäß einer zweiten Modulation modulierten Wellenlängenkanälen,
Multiplex-Mittel (30) zum Weiterleiten einer Gruppe von Wellenlängenkanälen an eine optische Ausgangsübertragungsleitung (25), wobei die besagten Multiplex-Mittel dazu ausgelegt sind, Wellenlängenkanäle, die von der besagten ersten Vielzahl von optischen Quellen erzeugt wurden, von einem ersten Eingangsabschnitt (53) der Multiplex-Mittel (30), und Wellenlängenkanäle, die von der besagten zweiten Vielzahl von optischen Quellen erzeugt wurden, von einem zweiten Eingangsabschnitt (51) der Multiplex-Mittel (30) weiterzuleiten,
**dadurch gekennzeichnet, dass** sie einen gemeinsamen Ausbreitungsabschnitt, einen Kombinationsabschnitt (43) zum Kombinieren der von der ersten und von der zweiten Vielzahl von optischen Quellen erzeugten Wellenlängenkanäle in dem gemeinsamen Ausbreitungsabschnitt, Verstärkermittel (45) zum Verstärken der besagten Wellenlängenkanäle in dem gemeinsamen Ausbreitungsabschnitt, und einen Diffusionsabschnitt (47) zum Aussenden der Wellenlängenkanäle von dem gemeinsamen Ausbreitungsabschnitt an den ersten und an den zweiten Eingangsabschnitt (53, 51) der Multiplex-Mittel umfasst.

2. Vorrichtung zur Übertragung nach Anspruch 1, **dadurch gekennzeichnet, dass** die besagten Multiplex-Mittel ein rekonfigurierbares Wellenlängenauswählmodul (30) umfassen, welches dafür programmiert ist, von der besagten ersten Vielzahl von optischen Quellen erzeugte Wellenlängenkanäle an einem ersten Eingangsport sowie von der besagten zweiten Vielzahl von optischen Quellen erzeugte Wellenlängenkanäle an einem zweiten Eingangsport auszuwählen.

3. Vorrichtung zur Übertragung nach Anspruch 2, **dadurch gekennzeichnet, dass** das besagte rekonfigurierbare Wellenlängenauswählmodul (30) rekonfigurierbare Filtermittel zum Einstellen einer Bandbreite der ausgewählten Wellenlängenkanäle umfasst.

4. Vorrichtung zur Übertragung nach Anspruch 2 oder 3, **dadurch gekennzeichnet, dass** das besagte rekonfigurierbare Wellenlängenauswählmodul einen Durchgangsport (35) umfasst, welcher für den Empfang von Wellenlängenkanälen von einer vorgeschalteten optischen Übertragungsleitung (21) ausgelegt ist.

5. Vorrichtung zur Übertragung nach Anspruch 4, **dadurch gekennzeichnet, dass** sie eine Durchgangsleitung (37) zum Transportieren von Wellenlängenkanälen bis zum Durchgangsport sowie ein an die Durchgangsleitung angeschlossenes Extraktionsmodul (39) zum Demodulieren der von mindestens einem der besagten Wellenlängenkanälen getragenen digitalen Daten umfasst.

6. Vorrichtung zur Übertragung nach Anspruch 5, **dadurch gekennzeichnet, dass** sie ein Dispersionskompensations-Element (17) umfasst, welches dazu ausgelegt ist, die in der besagten Durchgangsleitung ankommenden Kanäle zu verarbeiten.

7. Vorrichtung zur Übertragung nach einem der Ansprüche 1 bis 6, **dadurch gekennzeichnet, dass** der Kombinationsabschnitt einen farblosen optischen Kombinierer (43) umfasst.

8. Vorrichtung zur Übertragung nach einem der Ansprüche 1 bis 7, **dadurch gekennzeichnet, dass** der Diffusionsabschnitt einen farblosen optischen Koppler (47) umfasst.

9. Vorrichtung zur Übertragung nach einem der Ansprüche 1 bis 8, **dadurch gekennzeichnet, dass** sie ein einstellbares optisches Dämpfungsglied (46) an dem gemeinsamen Ausbreitungsabschnitt umfasst.

10. Vorrichtung zur Übertragung nach einem der Ansprüche 1 bis 9, **dadurch gekennzeichnet, dass** sie ein Dispersionskompensations-Element (15) umfasst, welches dazu ausgelegt ist, die von den besagten Multiplex-Mittel ausgehenden Kanäle zu verarbeiten.

11. Vorrichtung zur Übertragung nach einem der Ansprüche 1 bis 10, **dadurch gekennzeichnet, dass** die erste Modulation und die zweite Modulation verschiedene Modulationsfrequenzen aufweisen.

12. Vorrichtung zur Übertragung nach einem der Ansprüche 1 bis 11, **dadurch gekennzeichnet, dass** die erste Modulation und die zweite Modulation verschiedene Formate aufweisen.

13. Vorrichtung zur Übertragung nach einem der Ansprüche 1 bis 12, **dadurch gekennzeichnet, dass** der besagte erste und der besagte zweite Eingangsabschnitt der Multiplex-Mittel voneinander unterschiedliche Eigenschaften der chromatischen Dispersion aufweisen, welche jeweils für die modulierten Wellenlängenkanäle gemäß der ersten Modulation und für die modulierten Wellenlängenkanäle gemäß der zweiten Modulation angepasst sind.
